# FASCICULE DE BREVET EUROPEEN

(11) **EP 1 111 181 B1**
(45) Date de publication et mention de la délivrance du brevet: **17.11.2004**
(21) Numéro de dépôt: 00403423.7
(22) Date de dépôt: 06.12.2000
(51) Int. Cl.: E06B 3/26, E06B 3/96

(54) **Procédé pour l'assemblage de profiles mixtes pour la réalisation de chassis de porte ou fenêtre**
Verfahren zur Verbindung von zusammengesetzten Profilelementen für Tür-oder Fensterrahman
Method for assembling compound sections for making door- or windowframes

(30) Priorité: 21.12.1999 FR 9916186
(43) Date de publication de la demande: 27.06.2001
(73) Titulaire: TECHNAL, 31037 Toulouse Cedex (FR)
(72) Inventeur: Lahbib, Patrick, 31520 Ramonville Saint-Agne (FR); Bouzignac, Michel, 31180 Saint-Genies Bellevue (FR); Perusin, Denis, 31190 Auterive (FR)
(74) Mandataire: Desaix, Anne

(56) Documents cités:
- EP-A- 0 036 286
- EP-A- 0 125 462
- EP-A- 0 251 300
- US-A- 3 928 100

## Description

La présente invention est relative à un procédé d'assemblage de profilés mixtes pour la fabrication d'un châssis de porte, fenêtre ou analogue.

On sait que de façon usuelle, les châssis de porte ou fenêtre, notamment ceux réalisés en menuiserie métallique, en particulier en aluminium, ou utilisant des matériaux plastiques rigides du genre PVC, se présentent sous la forme d'un cadre, entourant la partie centrale de la porte ou fenêtre, vitrée ou non, ce cadre étant constitué de profilés jointifs, généralement obtenus par extrusion et débités à la longueur correspondant à chacun des côtés du cadre, de préférence avec une coupe en biais, dite d'onglet, le cas échéant en coupe perpendiculaire à la direction longitudinale des profilés, l'assemblage de ces derniers dans chaque angle entre deux côtés consécutifs étant réalisé en accolant bord à bord leurs extrémités jointives.

Divers moyens sont mis en oeuvre de manière connue dans la technique pour réaliser un tel assemblage et assurer que les profilés assemblés soient convenablement maintenus l'un par rapport à l'autre, que le cadre du châssis soit destiné à un ouvrant, c'est-à-dire à la partie mobile de la porte ou fenêtre, par coulissement ou articulation vis-à-vis ou sur un support fixe, ou bien à un dormant, c'est-à-dire à un cadre fixe, immobilisé par rapport au gros oeuvre ou autre structure semblable où la porte ou fenêtre est montée, constituant notamment le support de l'ouvrant.

Si les quatre côtés du châssis sont réalisés à l'aide de profilés d'aluminium, leur assemblage est assuré par des vis, cette solution exigeant de pratiquer dans le matériau de ces profilés des perçages, embrèvements ou délardages, de manière à permettre le montage de ces vis sans qu'elles débordent du contour apparent du cadre pour ne pas gêner les mouvements relatifs du châssis, qu'il s'agisse d'un ouvrant ou d'un dormant.

Le cas échéant, cet assemblage est obtenu au moyen d'équerres à angle droit, dont les branches sont aménagées pour s'introduire à l'intérieur des profilés qui constituent les deux côtés consécutifs du cadre, ces équerres coopérant avec des pions ou des goupilles, voire avec d'autres moyens de blocage plus sophistiqués qui bloquent l'équerre en position et immobilisent mutuellement les deux profilés dans la position où ils sont respectivement perpendiculaires l'un à l'autre.

Lorsque les profilés formant les côtés du cadre sont constitués d'un matériau plastique rigide, leur liaison selon la coupe d'onglet prévue à leurs extrémités dans les angles de ce cadre, la solution classique consiste à assembler ces profilés par soudage.

Notamment et dans ce cas, chaque extrémité d'un profilé est appliquée contre une plaque chauffante ou analogue, qui fait fondre localement le matériau, les deux profilés formant les deux côtés du cadre étant alors pressés l'un contre l'autre, les deux extrémités s'assemblant par la fusion du matériau et son collage lors de son refroidissement.

Ces deux technologies ont des incidences notables en ce qui concerne la fabrication de ces châssis, en particulier le coût de cette opération.

Dans le cas d'un châssis en aluminium, le prix de revient est grevé par celui des équerres de liaison. En outre, une fois celles-ci mises en place, il est nécessaire de réaliser l'étanchéité du montage selon la tranche d'assemblage des deux profilés avec des moyens appropriés, généralement constitués par un mastic injecté in situ, cette opération exigeant de retirer le surplus de mastic qui déborde de la jonction et de nettoyer les deux profilés avant l'utilisation du châssis.

Il en résulte que cette technique est difficilement industrialisable, car si la coupe des profilés peut être facilement automatisée, les opérations de mise en place des équerres, d'injection du produit d'étanchéité ou de collage et de nettoyage du cadre sont réalisées manuellement.

Sous cet angle, l'utilisation de profilés en matière plastique rigide présente un très notable avantage. Toutefois, ces profilés ne permettent pas d'atteindre les performances d'un châssis métallique, notamment en ce qui concerne son indéformabilité et sa présentation plus esthétique.

On connaît par ailleurs des châssis de porte ou fenêtre constitués de profilés, désignés sous le terme de "mixte", dans lesquels chacun de ces profilés formant les quatre côtés du cadre est réalisé à l'aide de deux éléments, respectivement métallique et en matière plastique, jointifs et s'étendant selon la même direction longitudinale, l'assemblage de ces deux parties étant réalisé par tout moyen approprié, de préférence par sertissage de l'une vis-à-vis de l'autre, l'élément métallique du profilé comportant par exemple une rainure longitudinale de forme adéquate, dans laquelle s'engage une nervure de même profil de l'élément en matière plastique ou vice versa.

Le cas échéant, ces profilés mixtes peuvent comporter deux éléments métalliques parallèles l'un à l'autre, réunis et enserrant entre eux un élément en matière plastique.

L'avantage de tels profilés mixtes réside notamment dans la "coupure thermique" qu'ils procurent entre les faces externe et interne de la porte ou fenêtre fabriquée au moyen de châssis mettant en oeuvre de tels profilés, l'élément en matière plastique présentant une conductibilité thermique très notablement inférieure à celle de l'élément métallique, limitant la propagation du froid ou du chaud de l'intérieur vers l'extérieur ou vice versa.

Mais ces profilés mixtes, tels qu'ils sont utilisés dans la technique connue, exigent encore des moyens d'assemblage entre les éléments métalliques dans leurs coupes d'extrémité, faisant appel à nouveau à des équerres de liaison avec les inconvénients déjà cités quant au coût du montage et aux difficultés présentées pour réaliser son étanchéité.

La présente invention concerne un procédé d'assemblage de profilés mixtes du genre précité, qui pallie ces inconvénients.

A cet effet, le procédé considéré, pour l'assemblage de profilés mixtes formant les côtés d'un châssis, ces profilés étant découpés à leurs extrémités pour s'abouter deux à deux dans chacun des angles de ce châssis, chaque profilé comportant au moins un élément métallique et au moins un élément en matière plastique, reliés mutuellement l'un à l'autre par sertissage ou autre moyen de liaison similaire selon leur direction longitudinale, se caractérise en ce qu'il consiste, pour chacun des profilés mixtes du cadre, à découper l'extrémité de l'élément en matière plastique dans chaque angle du châssis de manière à lui donner une longueur légèrement plus importante que celle de l'élément métallique associé dans ce profilé, puis à réunir mutuellement les deux éléments en matière plastique des deux profilés constituant deux côtés consécutifs du cadre au droit de leurs extrémités plus longues en assurant leur fusion locale et leur soudage par pression de ces extrémités l'une contre l'autre, jusqu'à abouter les extrémités correspondantes et voisines des deux éléments métalliques, sans qu'un autre moyen de liaison soit prévu entre lesdits éléments métalliques.

Selon l'invention, lors de la découpe de chaque profilé mixte, en particulier lors de la réalisation de la coupe d'onglet prévue pour chaque angle du cadre du châssis, on débite l'élément en matière plastique de ce profilé de sorte qu'il présente une longueur légèrement supérieure à celle de l'élément métallique. En pratique, l'écart de coupe entre les deux éléments, sur toute la longueur de l'onglet est de l'ordre de 2 à 3 mm.

L'assemblage des deux profilés dans chaque angle du cadre est alors réalisé selon une technologie en elle-même connue pour les châssis en matière plastique, les surlongueurs formées aux extrémités de ces deux profilés étant échauffées au moyen de lames chauffantes, qui les portent à la température de fusion du matériau, ces extrémités étant ensuite pressées l'une contre l'autre.

Du fait de la fusion de la matière plastique, celle-ci s'écrase et se comprime localement, jusqu'à ce que les éléments métalliques viennent en contact, sans autre moyen de liaison nécessaire entre eux, l'assemblage des deux profilés mixtes étant directement assuré par le collage mutuel par fusion des deux éléments associés en matière plastique.

Avantageusement, le cadre ainsi fabriqué peut subir ultérieurement un traitement final dans une machine d'ébavurage, de manière à éliminer les éventuels bourrelets de matière plastique provenant de la fusion et de la compression l'une contre l'autre des extrémités des profilés mixtes.

Selon une disposition avantageuse, on peut prévoir dans chaque profilé mixte un dégagement au droit de la liaison entre les deux éléments en matière plastique de ce profilé, de manière à recevoir le bourrelet, lequel ainsi caché à la vue à l'extérieur du cadre, ne nécessite plus qu'il soit éliminé.

D'autres caractéristiques du procédé conforme à l'invention, apparaîtront encore à travers la description qui suit d'un exemple de mise en oeuvre, donné à titre indicatif et non limitatif, en référence aux dessins annexés sur lesquels :
- La Figure 1 est une vue en coupe schématique d'un châssis pour porte ou fenêtre, dont le cadre est constitué au moyen de profilés mixtes d'un type en lui-même connu dans la technique.
- Les Figures 2 et 3 représentent, en perspective et en élévation respectivement, des profilés mixtes tels que prévus pour la réalisation du cadre selon la Figure 1.
- La Figure 4 illustre, vue en élévation, l'extrémité d'un profilé mixte prévu pour la mise en oeuvre du procédé selon l'invention.
- Les Figures 5a, b et c, sont des vues plus schématiques de deux profilés mixtes selon la Figure 4, et permettent de mieux comprendre les étapes successives de fabrication du cadre avec le procédé considéré.

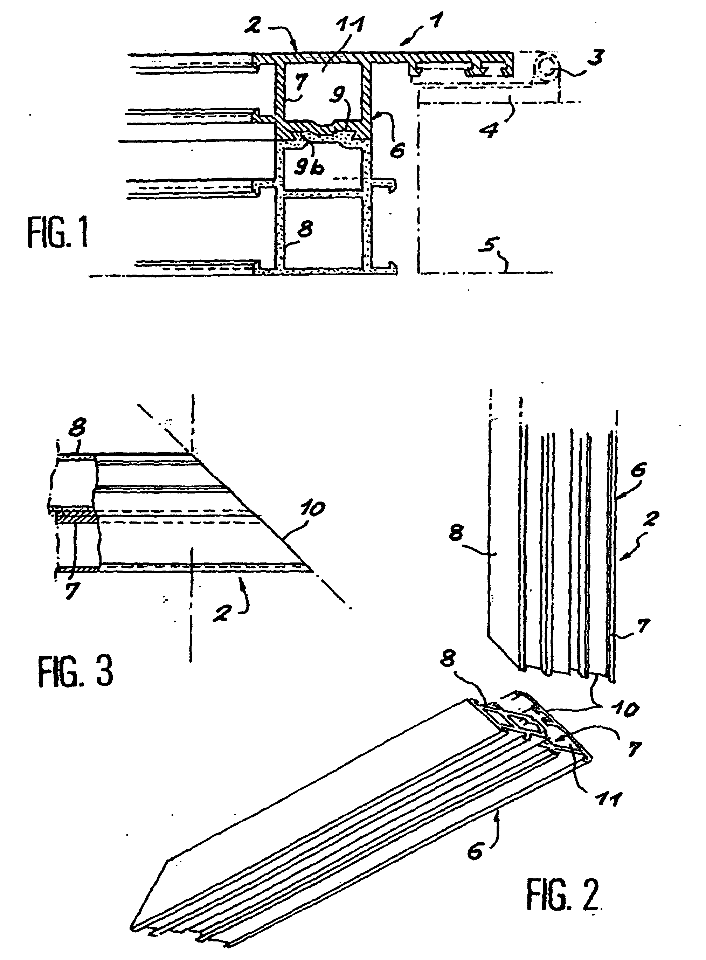

Sur la Figure 1, la référence 1 désigne un châssis de fenêtre comportant un cadre ouvrant 2 monté pivotant autour d'une articulation 3 sur un support fixe ou dormant 4, immobilisé vis-à-vis du gros oeuvre ou d'une structure similaire 5 dans laquelle est monté ce support.

Le cadre ouvrant 2 est constitué par l'assemblage de profilés mixtes 6 dont le détail de la réalisation n'importe pas directement à l'invention, sauf à préciser que ces profilés sont formés, dans l'exemple représenté, au moyen d'un élément métallique 7 et d'un élément en matière plastique 8, liés l'un à l'autre et s'étendant chacun selon la même direction longitudinale.

Dans l'exemple illustré, l'élément 7 comporte une rainure 9a dans laquelle est sertie une nervure 9b de l'élément 8, en forme ici de queue d'aronde.

Comme on peut mieux le voir sur les Figures 2 et 3, le cadre ouvrant 2 est constitué, selon ses quatre côtés, au moyen de quatre profilés mixtes 6, dont deux seulement apparaissent sur la Figure 2 et un seul sur la Figure 3, ces profilés étant préalablement découpés dans les angles du cadre selon une coupe en biais dite à onglet 10, de sorte que deux profilés successifs soient appliqués l'un contre l'autre selon cette coupe pour former chacun de ces angles.

Dans la solution classique, l'assemblage des profilés nécessite l'utilisation d'équerres de liaison (non représentées), dont les branches sont aménagées pour s'engager dans la partie creuse 11 des éléments métalliques 7, en bloquant ainsi ces profilés. Cette solution présente les désavantages précédemment rappelés.

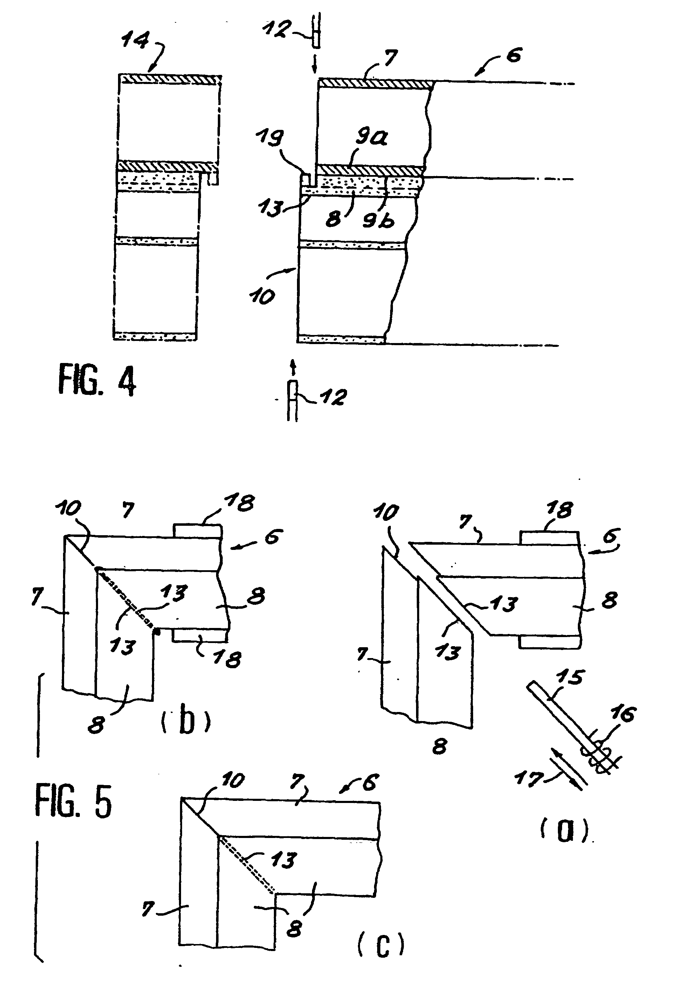

Conformément à l'invention, la coupe 10 réalisée aux extrémités de chaque profilé mixte 6 est effectuée à l'aide d'un outil du genre scie ou analogue 12, schématisé sur la Figure 4 et aménagé de sorte que l'élément 8 en matière plastique présente en bout une surlongueur 13 au-delà de l'extrémité correspondante de l'élément 7, la partie restante 14 du profilé étant éliminée.

Les profilés mixtes étant ainsi préparés, le procédé d'assemblage est mis en oeuvre comme schématisé sur la Figure 5, les surlongueurs 13 de deux profilés voisins étant portées à une température suffisamment élevée pour assurer leur fusion à l'aide d'un outil chauffant 15, par exemple du type d'un plateau métallique associé à une résistance électrique de chauffage 16, le plateau 15 pouvant être amené entre les deux profilés puis retiré automatiquement comme schématisé par les flèches 17 sur la Figure 5a.

Dans les étapes suivantes, l'un des profilés mixtes, maintenu par une pince 18, est appliqué contre l'autre profilé de manière à en mettre en contact les surlongueurs 13 de l'un et de l'autre, qui viennent d'être portées à température de fusion, ces surlongueurs s'écrasant et se liant l'une à l'autre jusqu'à ce que, les deux éléments métalliques 7 associés soient également appliqués selon la coupe d'onglet 10 (Figure 5b).

Après refroidissement, la pince 18 est retirée, les deux profilés 6 restant parfaitement assemblés entre eux, grâce à la liaison des éléments 8 et sans qu'il soit nécessaire de réunir autrement les deux éléments 7.

Avantageusement, les éléments 8 peuvent comporter un dégagement 19 (Figure 4) au voisinage de la liaison entre la rainure 9a et la nervure 9b des éléments 7 et 8, de sorte que l'éventuel bourrelet de matière plastique formé par l'écrasement des surlongueurs 13 lors de leur fusion et de leur application l'une sur l'autre, soit repris à l'intérieur des profilés, sans être visible de l'extérieur. Dans le cas où ce dégagement 19 n'est pas prévu, le bourrelet peut être éliminé par une simple opération sur une machine d'ébavurage.

On réalise ainsi un assemblage de profilés mixtes, dont l'usage est particulièrement recommandé pour assurer une coupure thermique efficace, qui s'avère simple et économique, le cadre réalisé conservant tous les avantages des structures métalliques et notamment en aluminium.

Bien entendu, l'invention ne se limite pas à l'exemple de mise en oeuvre du procédé tel qu'illustré ci-dessus en référence aux dessins annexés ; elle en embrasse au contraire toutes les variantes dans le cadre des revendications annexées.

## Revendications

1. Procédé pour l'assemblage de profilés mixtes formant les côtés d'un châssis, ces profilés étant découpés à leurs extrémités pour s'abouter deux à deux dans chacun des angles de ce châssis, chaque profilé comportant au moins un élément métallique et au moins un élément en matière plastique, reliés mutuellement l'un à l'autre par sertissage ou autre moyen de liaison similaire selon leur direction longitudinale, **caractérisé en ce qu'**il consiste, pour chacun des profilés mixtes (6) du cadre, à découper l'extrémité de l'élément en matière plastique (8) dans chaque angle du châssis de manière à lui donner une longueur (13) légèrement plus importante que celle de l'élément métallique (7) associé dans ce profilé, puis à réunir mutuellement les deux éléments en matière plastique des deux profilés constituant deux côtés consécutifs du cadre au droit de leurs extrémités plus longues en assurant leur fusion locale et leur soudage par pression de ces extrémités l'une contre l'autre, jusqu'à abouter les extrémités correspondantes et voisines des deux éléments métalliques, sans qu'un autre moyen de liaison soit prévu entre lesdits éléments métalliques.

2. Procédé selon la revendication 1, **caractérisé en ce qu'**on prévoit dans chaque profilé mixte un dégagement au droit de la liaison entre les deux éléments en matière plastique.

3. Procédé selon la revendication 1, **caractérisé en ce qu'**on réalise sur les profilés un traitement final dans une machine d'ébavurage, de manière à éliminer les éventuels bourrelets de matière plastique provenant de la fusion et de la compression l'une contre l'autre des extrémités des profilés mixtes.

## Patentansprüche

1. Verfahren zum Zusammenbauen von gemischten Profilen, die die Seiten eines Gestells bilden, wobei diese Profile an ihren Enden zugeschnitten sind, um paarweise in jedem Winkel dieses Gestells aneinander zu liegen, wobei jedes Profi 1 mindestens ein Metallelement und mindestens ein Kunststoffelement aufweist, die mittels Bördelung oder einer anderen ähnlichen Verbindungseinrichtung entlang ihrer Längsrichtung miteinander verbunden sind, **dadurch gekennzeichnet, daß** für jedes der gemischten Profile (6) des Rahmens das Ende des Kunststoffelements (8) in jedem Winkel des Gestells zugeschnitten wird, um ihm so eine Länge (13) zu geben, die bedeutender ist als die des dazugehörigen Metallelements (7) in diesem Profil, und dann die beiden Kun ststoffelemente der zwei Profile, die zwei aufeinanderfolgende Seiten des Rahmens bilden, unter Sicherstellung ihrer örtlichen Vereinigung und Verschweißung senkrecht zu ihren längeren Enden dadurch miteinander verbunden werden, daß diese zwei Enden gegeneinander gedrückt werden, bis die entsprechenden und benachbarten Enden der zwei Metallelemente aneinander liegen, ohne daß eine andere Verbindungseinrichtung zwischen den Metallelementen notwendig ist.

2. Verfahren nach Anspruch 1, **dadurch gekennzeichnet, daß** in jedem gemischten Profil ein lichter Abstand senkrecht zur Verbindung zwischen den beiden Kunststoffelementen vorgesehen ist.

3. Verfahren nach Anspruch 1, **dadurch gekennzeichnet, daß** an den Profilen eine Endbearbeitung in einer Entgratungsmaschine ausgeführt wird, um eventuelle Wulste aus Kunststoff zu entfernen, die von der Vereinigung und dem Gegeneinanderdrücken der Enden der gemischten Profile herrühren.

## Claims

1. A method of assembling together composite bars forming the sides of a sash, the bars being cut at their ends so as to abut in pairs in each of the corners of the sash, each bar comprising at least one metal element and at least one element made of plastic material, the elements being bonded together by crimping or by other similar bonding means in their longitudinal direction, the method being **characterized in that**, for each of the composite bars (6) of the frame, it consists in cutting the end of the element (8) made of plastic material in each corner of the sash in such a manner as to give it a length (13) that is slightly greater than that of the associated metal element (7) in the bar, and then in uniting the two elements made of plastic material of the two bars constituting two consecutive sides of the frame at their longer ends by causing them to melt locally and by welding said ends together while pressing one against the other until the corresponding adjacent ends of the two metal elements come into abutment, without other bonding means being necessary between said metal elements.

2. A method according to claim 1, **characterized in that** a setback is provided in each composite bar in register with the bond between the two elements made of plastic material.

3. A method according to claim 1, **characterized in that** final processing is performed on the bars in a trimming machine so as to eliminate any beads of plastic material that might be derived from the melting and the compression of the ends of the composite bars against one another.
